# EUROPÄISCHE PATENTSCHRIFT

(11) **EP 4 362 322 B1**
(45) Veröffentlichungstag und Bekanntmachung des Hinweises auf die Patenterteilung: **09.04.2025**
(21) Anmeldenummer: 23204027.9
(22) Anmeldetag: 17.10.2023
(51) Int. Cl.: H02P 29/028, B62D 5/04, B62D 1/04

(54) **ELEKTROMECHANISCHES LENKSYSTEM MIT EINEM DOPPELWICKLUNGS-DREHSTROMMOTOR UND VERFAHREN ZUM BETREIBEN EINES DOPPELWICKLUNGS-DREHSTROMMOTORS**
ELECTROMECHANICAL STEERING SYSTEM HAVING A DOUBLE WINDING ROTARY CURRENT MOTOR AND METHOD FOR OPERATING A DOUBLE WINDING ROTARY CURRENT MOTOR
SYSTÈME DE DIRECTION ÉLECTROMÉCANIQUE COMPRENANT UN MOTEUR À COURANT ROTATIF À DOUBLE ENROULEMENT ET PROCÉDÉ DE FONCTIONNEMENT D'UN MOTEUR À COURANT ROTATIF À DOUBLE ENROULEMENT

(30) Priorität: 28.10.2022 BE 202205887
(43) Veröffentlichungstag der Anmeldung: 01.05.2024
(73) Patentinhaber: thyssenkrupp Presta Aktiengesellschaft, 9492 Eschen (LI); thyssenkrupp AG, 45143 Essen (DE)
(72) Erfinder: Gliga, Peter, 9465 Salez (CH)
(74) Vertreter: thyssenkrupp Intellectual Property GmbH

(56) Entgegenhaltungen:
- CN-A- 113 872 495
- US-A1- 2019 393 823

## Beschreibung

Die Erfindung betrifft ein elektromechanisches Lenksystem für ein Kraftfahrzeug umfassend einen Doppelwicklungs-Drehstrommotor mit einem ersten Phasensatz und einem zweiten Phasensatz, die jeweils eine erste Phase, eine zweite Phase und eine dritte Phase aufweisen, und eine Schaltungsanordnung zum Betreiben des Doppelwicklungs-Drehstrommotors. Die Schaltungsanordnung umfasst einen ersten Wechselrichter mit zu drei ersten Halbbrücken verschalteten ersten Transistoren und ersten Anschlüssen, die elektrisch leitfähig mit den Phasen des ersten Phasensatzes des Doppelwicklungs-Drehstrommotors verbunden sind, sowie einen zweiter Wechselrichter mit zu drei zweiten Halbbrücken verschalteten zweiten Transistoren und zweiten Anschlüssen, die elektrisch leitfähig mit den Phasen des zweiten Phasensatzes des Doppelwicklungs-Drehstrommotors verbunden sind.

Des Weiteren betrifft die Erfindung ein Verfahren zum Betreiben eines Doppelwicklungs-Drehstrommotors in einem elektromechanischen Lenksystem, mit einem ersten Phasensatz und einem zweiten Phasensatz, die jeweils eine erste Phase, eine zweite Phase und eine dritte Phase aufweisen, wobei an den ersten Phasensatz ein erster Wechselrichter und an den zweiten Phasensatz ein zweiter Wechselrichter angeschlossen ist, wobei der erste Wechselrichter aus zu drei ersten Halbbrücken verschalteten ersten Transistoren gebildet ist und der zweite Wechselrichter aus zu drei zweiten Halbbrücken verschalteten zweiten Transistoren gebildet ist.

Ein gattungsgemäßes elektromechanisches Lenksystem ist aus der US 2019/0393823 A1 bekannt. Zudem ist im Stand der Technik beispielsweise aus der WO 2017/045729 A1 ein elektromechanisches Lenksystem mit einem Drehstrommotor und einer Schaltungsanordnung zum Betreiben des Drehstrommotors bekannt. Der Drehstrommotor kann dabei als Doppelwicklungs-Drehstrommotoren ausgebildet sein, also als ein Drehstrommotor mit zwei Wicklungssystemen, der entsprechend einen ersten Phasensatz als eine erste Wicklungsgruppe und einen zweiten Phasensatz als eine zweite Wicklungsgruppe umfasst. Ein solcher Drehstrommotor soll dabei selbst bei einem auftretenden Fehler in einem Wicklungsstrang weiterhin ein Drehmoment bereitstellen können, insbesondere bei einem Einsatz eines solchen Motors in einem elektromechanischen Lenksystem, um zu verhindern, dass eine Lenkunterstützung plötzlich ausfällt.

Ein Doppelwicklungs-Drehstrommotor kann insofern auch dann noch weiterbetrieben werden, wenn in Bezug auf einen der Wicklungsstränge ein Fehler auftritt. Problematisch ist allerdings der Fall, wenn in Bezug auf die beiden Wicklungsstränge ein Fehler auftritt. Ein Auftreten von Fehlern in Bezug auf die beiden Wicklungsstränge führt regelmäßig zu einem vollständigen Ausfall des Doppelwicklungs-Drehstrommotors. Ein elektromechanisches Lenksystem, das einen Doppelwicklungs-Drehstrommotor zur Bereitstellung einer Lenkunterstützung nutzt, könnte dann keine Lenkunterstützung mehr bereitstellen.

Vor diesem Hintergrund ist es eine Aufgabe der vorliegenden Erfindung, ein elektromechanisches Lenksystem mit einem Doppelwicklungs-Drehstrommotor zu verbessern und ein verbessertes Verfahren zum Betreiben eines Doppelwicklungs-Drehstrommotors bereitzustellen, wobei der Doppelwicklungs-Drehstrommotor insbesondere noch weiter betreibbar sein soll, wenn in einem einem ersten Wicklungsstrang zugeordneten ersten Wechselrichter und in einem einem zweiten Wicklungsstrang zugeordneten Wechselrichter jeweils ein Fehler aufgetreten ist.

Zur Lösung dieser Aufgabe werden ein elektromechanisches Lenksystem mit einem Doppelwicklungs-Drehstrommotor und ein Verfahren zum Betreiben eines Doppelwicklungs-Drehstrommotors gemäß den unabhängigen Ansprüchen sowie ein Verfahren zum Betreiben eines elektromechanischen Lenksystems mit einer einen Doppelwicklungs-Drehstrommotor gemäß dem nebengeordneten Anspruch vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein elektromechanisches Lenksystem für ein Kraftfahrzeug vor, umfassend einen Doppelwicklungs-Drehstrommotor mit einem ersten Phasensatz und einem zweiten Phasensatz, die jeweils eine erste Phase, eine zweite Phase und eine dritte Phase aufweisen, und eine Schaltungsanordnung zum Betreiben des Doppelwicklungs-Drehstrommotors. Die Schaltungsanordnung umfasst einen ersten Wechselrichter mit zu drei ersten Halbbrücken verschalteten ersten Transistoren und ersten Anschlüssen, die elektrisch leitfähig mit den Phasen des ersten Phasensatzes des Doppelwicklungs-Drehstrommotors verbunden sind, sowie einen zweiter Wechselrichter mit zu drei zweiten Halbbrücken verschalteten zweiten Transistoren und zweiten Anschlüssen, die elektrisch leitfähig mit den Phasen des zweiten Phasensatzes des Doppelwicklungs-Drehstrommotors verbunden sind. Erfindungsgemäß ist dabei vorgesehen, dass der erste Phasensatz mit dem zweiten Phasensatz als Sternschaltung elektrisch leitfähig verbunden ist. Hierdurch wird es vorteilhafterweise ermöglicht, den Doppelwicklungs-Drehstrommotor durch geeignete Ansteuerung weiter zu betreiben, insbesondere mittels einer symmetrischen Pulsweitenmodulation, wenn ein Fehler in dem ersten Wechselrichter, insbesondere ein Kurzschluss in einem Transistor des ersten Wechselrichters, und zudem ein weiterer Fehler in dem zweiten Wechselrichter, insbesondere ein Kurzschluss in einem weiteren Transistor des zweiten Wechselrichters, nachfolgend auch Doppelfehler genannt, aufgetreten ist. Insofern wird vorteilhafterweise durch die Sternschaltung die Ausfallsicherheit erhöht und insbesondere eine weitere Redundanzstufe bereitgestellt.

Insbesondere ist vorgesehen, dass die Schaltungsanordnung zum Betreiben des Doppelwicklungs-Drehstrommotors eingerichtet ist, mittels einer Pulsweitenmodulation betrieben zu werden, die bezüglich des ersten Wechselrichters und des zweiten Wechselrichters synchronisiert ist. Hierdurch lässt sich der Doppelwicklungs-Drehstrommotor insbesondere in dem Fall von Fehlern in Bezug auf beide Wicklungsstränge besonders geeignet weiterbetreiben. Vorzugsweise ist der Doppelwicklungs-Drehstrommotor ein symmetrisch ausgebildeter Doppelwicklungs-Drehstrommotor oder zumindest ein annähernd symmetrisch ausgebildeter Doppelwicklungs-Drehstrommotor. Der Betrieb des Doppelwicklungs-Drehstrommotors ist bei Symmetrie in dem Doppelfehlerfall vorteilhafterweise verbessert.

Eine weitere vorteilhafte Ausgestaltung sieht vor, dass die ersten Anschlüsse der Schaltungsanordnung jeweils über einen Schutzschalter mit den Phasen des ersten Phasensatzes elektrisch leitfähig verbunden sind und die zweiten Anschlüsse jeweils über einen Schutzschalter mit den Phasen des zweiten Phasensatzes elektrisch leitfähig verbunden sind. Vorteilhafterweise ist der Doppelwicklungs-Drehstrommotor hierdurch im Fehlerfall verbessert vor Beschädigung geschützt und der Betrieb des Doppelwicklungs-Drehstrommotors im Doppelfehlerfall vorteilhafterweise verbessert.

Insbesondere ist vorgesehen, dass der erste Phasensatz mit dem zweiten Phasensatz permanent als Sternschaltung elektrisch leitfähig verbunden ist. Gemäß einer vorteilhaften Ausgestaltungsvariante des Lenksystems ist allerdings vorgesehen, dass die Schaltungsanordnung ein steuerbares Schaltelement, insbesondere einen Transistor, umfasst, über das die Sternschaltung zwischen dem ersten Phasensatz und dem zweiten Phasensatz geöffnet oder geschlossen werden kann. Vorteilhafterweise kann der Doppelwicklungs-Drehstrommotor dann bei geöffnetem Schaltelement im fehlerfreien Fall auch auf klassische Weise, insbesondere wie in der WO 2017/045729 A1 beschrieben, betrieben werden. Im Doppelfehlerfall ist die Sternschaltung hingegen vorteilhafterweise geschlossen.

Das Lenksystem umfasst gemäß einer vorteilhaften Weiterbildung zudem eine Fehlerdetektionseinheit. Diese Fehlerdetektionseinheit ist vorteilhafterweise ausgebildet, ein Auftreten eines Fehlers in den ersten Halbbrücken und den zweiten Halbbrücken der Schaltungsanordnung zu erkennen, und bei einem erkannten Auftreten eines Fehlers in den ersten Halbbrücken und einem erkannten Auftreten eines Fehlers in den zweiten Halbbrücken das steuerbare Schaltelement derart anzusteuern, dass die Sternschaltung geschlossen ist. Insbesondere kann die Fehlerdetektionseinheit von einer dem Lenksystem zugeordneten elektronischen Steuereinheit umfasst sein. Vorteilhafterweise wird mit einem Schließen der Sternschaltung durch Ansteuerung des Schaltelements auch die Ansteuerung des Doppelwicklungs-Drehstrommotors angepasst.

Eine weitere vorteilhafte Ausgestaltung des Lenksystems umfasst eine Lenkstellereinheit, wobei die Lenkstellereinheit den Doppelwicklungs-Drehstrommotor umfasst. Mittels der Lenkstellereinheit wird dabei ein Lenkbefehl in eine Lenkbewegung von lenkbaren Rädern eines Kraftfahrzeugs umgesetzt. Insofern ist der Ausfall der Lenkstellereinheit besonders sicherheitskritisch. Durch die erfindungsgemäße Ausgestaltung ist die Ausfallsicherheit vorteilhafterweise erhöht.

Weiter vorteilhaft ist das Lenksystem zur Ausführung eines erfindungsgemäß ausgebildeten Verfahrens ausgebildet. Ausgestaltungen des erfindungsgemäßen Verfahrens werden insbesondere nachstehend beschrieben.

So ist ein Verfahren zum Betreiben eines Doppelwicklungs-Drehstrommotors mit einem ersten Phasensatz und einem zweiten Phasensatz, die jeweils eine erste Phase, eine zweite Phase und eine dritte Phase aufweisen, in einem elektromechanischen Lenksystem vorgesehen, wobei an den ersten Phasensatz ein erster Wechselrichter und an den zweiten Phasensatz ein zweiter Wechselrichter angeschlossen ist. Der erste Wechselrichter ist dabei aus zu drei ersten Halbbrücken verschalteten ersten Transistoren gebildet und der zweite Wechselrichter ist aus zu drei zweiten Halbbrücken verschalteten zweiten Transistoren gebildet. Gemäß dem vorgeschlagenen Verfahren wird bei einem ersten Fehler in Bezug auf den ersten Wechselrichter und einem zusätzlichen zweiten Fehler in Bezug auf den zweiten Wechselrichter der Doppelwicklungs-Drehstrommotor mit in Sternschaltung verbundenem ersten Phasensatz und zweitem Phasensatz weiter betrieben. Ein vollständiger Ausfall des Doppelwicklungs-Drehstrommotors wird somit vorteilhafterweise verhindert.

Insbesondere wird der Doppelwicklungs-Drehstrommotor mittels einer Pulsweitenmodulation betrieben, die vorzugsweise bezüglich des ersten Wechselrichters und des zweiten Wechselrichters synchronisiert ist. Auf diese Weise lässt sich der Doppelwicklungs-Drehstrommotor vorteilhafterweise geeignet weiter betreiben.

Gemäß einer Ausgestaltung ist vorgesehen, dass der erste Phasensatz und der zweite Phasensatz dauerhaft in Sternschaltung verbunden werden, und insofern insbesondere auch der fehlerfreie Betrieb des Doppelwicklungs-Drehstrommotors hieran entsprechend angepasst ist. Eine vorteilhafte Ausgestaltungsvariante sieht aber vor, dass bei einem Erkennen des ersten Fehlers in Bezug auf den ersten Wechselrichter und einem Erkennen des zusätzlichen zweiten Fehlers in Bezug auf den zweiten Wechselrichter der erste Phasensatz und der zweite Phasensatz in Sternschaltung verbunden werden. Der Doppelwicklungs-Drehstrommotor kann insofern bei einem Auftreten des Doppelfehlers in Sternschaltung weiter betrieben werden. Im fehlerfreien Fall kann der Doppelwicklungs-Drehstrommotor hingegen in üblicher Weise ohne Sternschaltung betrieben werden. Die Ansteuerung des Doppelwicklungs-Drehstrommotors wird dann entsprechend an den Fehlerfall angepasst.

Insbesondere ist in Bezug auf die vorstehend genannte Ausgestaltungsvariante vorgesehen, dass bei dem Erkennen des ersten Fehlers in Bezug auf den ersten Wechselrichter und dem Erkennen des zusätzlichen zweiten Fehlers ein bis zum Erkennen des zusätzlichen zweiten Fehlers geöffnetes Schaltelement geschlossen wird, wobei durch das Schließen des Schaltelements der erste Phasensatz und der zweite Phasensatz in Sternschaltung verbunden werden.

Weiter ist insbesondere vorgesehen, dass ein Fehler in Bezug auf einen der ersten Transistoren, insbesondere ein Kurzschluss eines der ersten Transistoren, der erste Fehler in Bezug auf den ersten Wechselrichter ist, und dass ein Fehler in Bezug auf einen der zweiten Transistoren, insbesondere ein Kurzschluss eines der zweiten Transistoren, der zweite Fehler in Bezug auf den zweiten Wechselrichter ist. Vorteilhafterweise wird so auf eine Fehlerursache mit im Vergleich zu anderen möglichen Fehlern vergleichsweise hoher Auftrittswahrscheinlichkeit reagiert und diesem Fehler geeignet begegnet.

Eine weitere vorteilhafte Ausgestaltung sieht vor, dass die Schaltungsanordnung auf ein Auftreten des ersten Fehlers und ein Auftreten des zweiten Fehlers überwacht wird, insbesondere mittels eine Fehlerdetektionseinheit. Vorteilhafterweise kann so schnell auf auftretende Fehler reagiert werden, insbesondere auf den Doppelfehlerfall. Eine Ausfallzeit ist insofern praktisch nicht gegeben, sondern der Doppelwicklungs-Drehstrommotor kann vorteilhafterweise durch entsprechende Ansteuerung lückenlos weiter betrieben werden.

Insbesondere ist bei einem erfindungsgemäß ausgebildeten Verfahren vorgesehen, dass der Doppelwicklungs-Drehstrommotor von einem elektromechanischen Lenksystem umfasst ist und in dem Lenksystem entsprechend betrieben wird. Insbesondere kann der Doppelwicklungs-Drehstrommotor dabei von einer Lenkstellereinheit umfasst sein.

Des Weiteren wird ein Verfahren zum Betreiben eines elektromechanischen Lenksystems mit einer einen Doppelwicklungs-Drehstrommotor umfassenden Aktuatoreinheit, vorgeschlagen, wobei der Doppelwicklungs-Drehstrommotor gemäß einem erfindungsgemäß ausgebildeten Verfahren betrieben wird.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigt:
- Fig. 1: in einer vereinfachten perspektivischen Ansicht ein Ausführungsbeispiel für ein erfindungsgemäß ausgebildetes Lenksystem;
- Fig. 2: in einem Schaltbild einen im Stand der Technik bekannten Doppelwicklungs-Drehstrommotor und zugehöriger Schaltungsanordnung mit einem Fehler in einem Wechselrichter;
- Fig. 3: in einem Schaltbild einen im Stand der Technik bekannten Doppelwicklungs-Drehstrommotor und zugehöriger Schaltungsanordnung mit Fehlern in beiden Wechselrichtern; und
- Fig. 4: in einem Schaltbild ein Ausführungsbeispiel für einen erfindungsgemäß ausgebildeten Doppelwicklungs-Drehstrommotor und zugehöriger Schaltungsanordnung eines Lenksystems mit Fehlern in beiden Wechselrichtern.

In den verschiedenen Figuren sind gleiche Teile in der Regel mit den gleichen Bezugszeichen versehen und werden daher mitunter auch jeweils nur im Zusammenhang mit einer der Figuren erläutert.

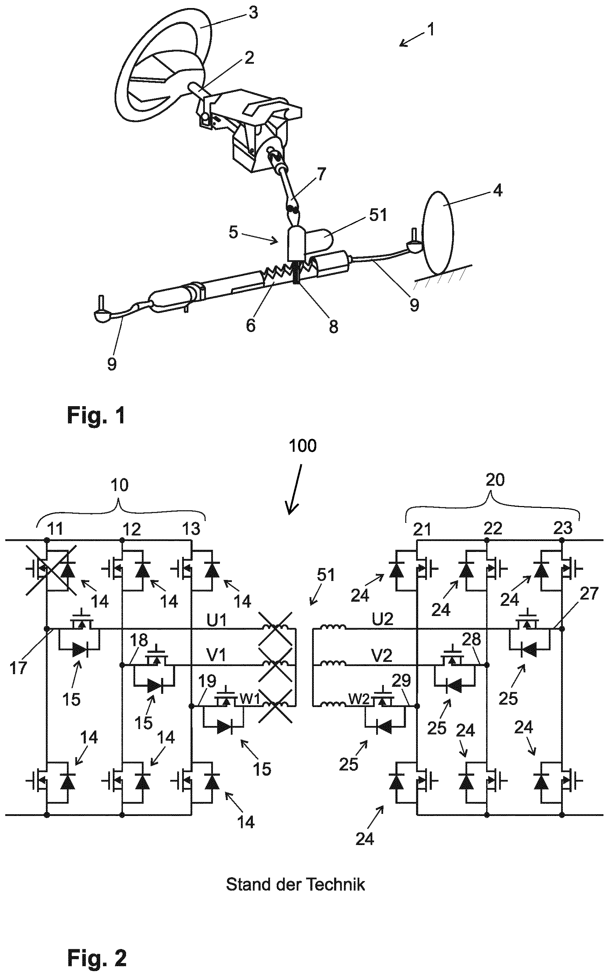

In Fig. 1 ist ein Ausführungsbeispiel für ein elektromechanisches Kraftfahrzeuglenksystem 1 mit einem Lenkrad 3, das mit einer oberen Lenkwelle 2 drehfest gekoppelt ist, schematisch dargestellt. Über die als Lenkrad 3 ausgebildete Lenkhandhabe kann ein in Fig. 1 nicht dargestellter Fahrer ein entsprechendes Drehmoment als Lenkbefehl in die Lenkwelle 2 einbringen. Das Drehmoment wird dann über die obere Lenkwelle 2 und die untere Lenkwelle 7 auf ein Lenkritzel 8 übertragen. Das Lenkritzel 8 kämmt in bekannter Weise mit einem Zahnsegment einer Zahnstange 6. Die Zahnstange 6 ist insbesondere in einem Lenkungsgehäuse in Richtung ihrer Längsachse verschieblich gelagert. An ihrem freien Ende ist die Zahnstange 6 mit Spurstangen 9 über nicht dargestellte Kugelgelenke verbunden. Die Spurstangen 9 selbst sind in bekannter Weise über Achsschenkel mit je einem gelenkten Rad 4 eines Kraftfahrzeugs verbunden.

Eine Drehung des Lenkrades 3 führt über die Verbindung der oberen Lenkwelle 2, der unteren Lenkwelle 8 und des Lenkritzels 8 zu einer Längsverschiebung der Zahnstange 6 und damit zu einer Verschwenkung der gelenkten Räder 4. Die gelenkten Räder 4 erfahren über eine Fahrbahn eine Rückwirkung, die der Lenkbewegung entgegenwirkt. Zum Verschwenken der Räder 4 ist folglich eine Kraft erforderlich, die ein entsprechendes Drehmoment am Lenkrad 3 erforderlich macht. Ein als Doppelwicklungs-Drehstrommotor 51 ausgebildeter Elektromotor eines Lenkstellereinheit 5 ist vorgesehen, um den Fahrer bei dieser Lenkbewegung zu unterstützen. Die Wicklungen des Doppelwicklungs-Drehstrommotor 51 sind dabei vorzugsweise symmetrisch ausgebildet.

Insbesondere kann vorgesehen sein, dass die obere Lenkwelle 2 und die untere Lenkwelle 7 drehelastisch über einen nicht gezeigten Drehstab miteinander gekoppelt sind. Eine Drehmomentsensoreinheit erfasst dann vorteilhafterweise die Verdrehung der oberen Lenkwelle 2 gegenüber der unteren Lenkwelle 7 als ein Maß des an der oberen Lenkwelle 2 oder des Lenkrades 3 manuell ausgeübten Drehmomentes. In Abhängigkeit des von der Drehmomentsensoreinheit gemessen Drehmoments berechnet eine in Fig. 1 nicht dargestellte Steuereinheit dann vorteilhafterweise die Lenkunterstützung, die von der Lenkstellereinheit 5 für den Fahrer bereitgestellt wird. Der Doppelwicklungs-Drehstrommotor 51 wird dazu über eine in Fig. 1 ebenfalls nicht explizit dargestellte Schaltungsanordnung entsprechend angesteuert.

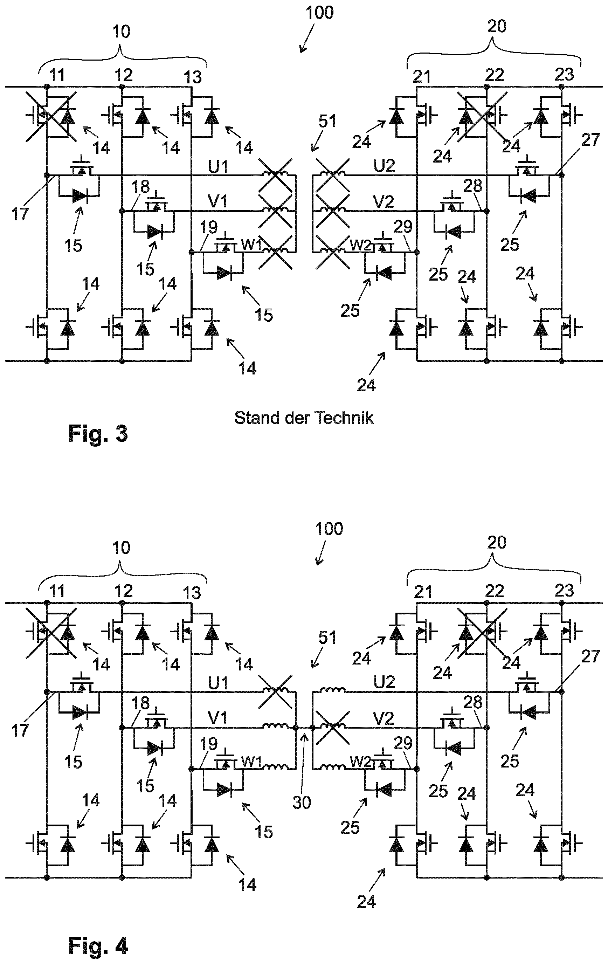

Eine im Stand der Technik bekannte Ausgestaltungen für eine Schaltungsanordnung 100 zur Steuerung des Doppelwicklungs-Drehstrommotors 51 ist in Fig. 2 und Fig. 3 gezeigt. Fig. 4 zeigt beispielhaft die Schaltungsanordnung 100 für das Lenksystem 1 gemäß Fig. 1. Die jeweilige Schaltungsanordnung 100 und der Doppelwicklungs-Drehstrommotor 51 sind in Fig. 2 bis Fig. 4 nur vereinfacht dargestellt.

Der Doppelwicklungs-Drehstrommotor 51 weist in Fig. 2 bis Fig. 4 jeweils einen ersten Phasensatz mit einer ersten Phase u1, einer zweiten Phase v1 und einer dritten Phase w1 sowie einen zweiten Phasensatz mit einer ersten Phase u2, einer zweiten Phase v2 und einer dritte Phase w2 auf. Die jeweilige in Fig. 2 bis Fig. 4 gezeigte Schaltungsanordnung 100 umfasst einen ersten Wechselrichter 10 mit zu drei ersten Halbbrücken 11, 12 ,13 verschalteten ersten Transistoren 14, insbesondere MOSFETs (MOSFET: metal-oxide-semiconductor field-effect transistor), und ersten Anschlüssen 17, 18, 19, die elektrisch leitfähig mit den Phasen u1, v1, w1 des ersten Phasensatzes des Doppelwicklungs-Drehstrommotors 51 verbunden sind. Des Weiteren umfasst die Schaltungsanordnung 100 einen zweiten Wechselrichter 20 mit zu drei zweiten Halbbrücken 21, 22, 23 verschalteten zweiten Transistoren 24, insbesondere MOSFETs (MOSFET: metal-oxide-semiconductor field-effect transistor), und zweiten Anschlüssen 27, 28, 29, die elektrisch leitfähig mit den Phasen u2, v2, w2 des zweiten Phasensatzes des Doppelwicklungs-Drehstrommotors 51 verbunden sind. Die Schaltungsanordnung 100 umfasst dabei Schutzschalter 15, 25, über die der erste Phasensatz beziehungsweise der zweite Phasensatz bei einem Fehler, insbesondere bei einem Kurzschluss in einer der Halbbrücken 11, 12, 13, 21, 22, 23, schaltungstechnisch getrennt werden kann.

Unter Nutzung der Schaltungsanordnung 100 wird der Doppelwicklungs-Drehstrommotor 51 dabei so betrieben, dass ein von einer in den Figuren nicht explizit gezeigten Spannungsquelle, insbesondere von einer Fahrzeugbatterie, bereitgestelltes Spannungssignal an den ersten Wechselrichter 10 und an den zweiten Wechselrichter 20 angelegt wird. Eine erste Pulsweitenmodulation wird dabei auf den ersten Wechselrichter 10 angewendet und eine zweite Pulsweitenmodulation wird auf den zweiten Wechselrichter 20 angewendet, um ein von dem Doppelwicklungs-Drehstrommotor 51 gefordertes Hilfsdrehmoment bereitstellen zu können. Bei dem Betreiben des Doppelwicklungs-Drehstrommotors 51 werden der erste Wechselrichter 10 und der zweite Wechselrichter 20 auf ein Auftreten eines Fehlers in den ersten Halbbrücken 11, 12, 13 und den zweiten Halbbrücken 21, 22, 23 überwacht.

Es wird nun beispielhaft angenommen, dass, wie in Fig. 2 symbolisch durch Durchkreuzung "X" gezeigt, in einer Halbbrücke 11, 12, 13 des ersten Wechselrichters 10 ein Kurzschluss aufgetreten ist. Hierdurch fällt der erste Phasensatz des Doppelwicklungs-Drehstrommotors 51 aus und der Doppelwicklungs-Drehstrommotor 51 kann nur noch eingeschränkt unter Nutzung des zweiten Phasenstrangs betrieben werden. Tritt dann zusätzlich noch ein weiterer Kurzschluss in einer Halbbrücke 21, 22, 23 des zweiten Wechselrichters 20 auf, wie in Fig. 3 symbolisch durch Durchkreuzung "X" gezeigt, so kann der Doppelwicklungs-Drehstrommotor 51 nicht weiter betrieben werden.

Um das zu verhindern, ist bei der erfindungsgemäß ausgestalteten Schaltungsanordnung 100 gemäß Fig. 4, wie in Fig. 4 gezeigt, der erste Phasensatz mit dem zweiten Phasensatz permanent als Sternschaltung 30 elektrisch leitfähig verbunden. Die Schaltungsanordnung 100 umfasst in diesem Ausführungsbeispiel zudem eine in Fig. 4 nicht explizit dargestellte Mikrocontrollereinheit. Diese Mikrocontrollereinheit ist dabei ausgebildet, eine Pulsweitenmodulation bereitzustellen, die bezüglich des ersten Wechselrichters 10 und des zweiten Wechselrichters 20 synchronisiert ist.

Alternativ zu der in Fig. 4 gezeigten permanenten Verbindung zwischen dem ersten Phasensatz und dem zweiten Phasensatz, kann eine Schaltungsanordnung 100 auch ein steuerbares Schaltelement umfassen, über das die Sternschaltung 30 zwischen dem ersten Phasensatz und dem zweiten Phasensatz geöffnet oder geschlossen werden kann. Insbesondere ist bei dieser Ausgestaltungsvariante eine Fehlerdetektionseinheit vorgesehen, die ausgebildet ist, ein Auftreten eines Fehlers in den ersten Halbbrücken 11, 12, 13 und den zweiten Halbbrücken 21, 22, 23 zu erkennen, und bei einem erkannten Auftreten eines Fehlers in den ersten Halbbrücken 11, 12, 13 und einem erkannten Auftreten eines Fehlers in den zweiten Halbbrücken 21, 22, 23 das steuerbare Schaltelement derart anzusteuern, dass die Sternschaltung 30 geschlossen ist.

Der Doppelwicklungs-Drehstrommotors 51 mit der Schaltungsanordnung 100, wie in Fig. 4 gezeigt, wird derart betrieben, dass bei einem ersten Fehler in Bezug auf den ersten Wechselrichter 10 und einem zusätzlichen zweiten Fehler in Bezug auf den zweiten Wechselrichter 20, wie in Fig. 4 symbolisch durch Durchkreuzung "X" gezeigt, der Doppelwicklungs-Drehstrommotor 51 mit in Sternschaltung 30 verbundenem ersten Phasensatz und zweitem Phasensatz weiter betrieben wird. Der Doppelwicklungs-Drehstrommotor 51 wird mittels einer Pulsweitenmodulation betrieben, die bezüglich des ersten Wechselrichters 10 und des zweiten Wechselrichters 20 synchronisiert ist. Zudem wird die Schaltungsanordnung 100 auf ein Auftreten des ersten Fehlers und ein Auftreten des zweiten Fehlers überwacht.

Ist die elektrisch leitfähige Verbindung zwischen dem ersten Phasensatz und dem zweiten Phasensatz, anders als in Fig. 4 gezeigt, nicht permanent als Sternschaltung 30 verbunden, so ist vorteilhafterweise vorgesehen, dass bei einem Erkennen des ersten Fehlers in Bezug auf den ersten Wechselrichter 10 und einem Erkennen des zusätzlichen zweiten Fehlers in Bezug auf den zweiten Wechselrichter 20 der erste Phasensatz und der zweite Phasensatz in Sternschaltung 30 verbunden werden. Dazu wird insbesondere ein bis zum Erkennen des zusätzlichen zweiten Fehlers geöffnetes Schaltelement geschlossen, wobei durch das Schließen des Schaltelements der erste Phasensatz und der zweite Phasensatz in Sternschaltung 30 verbunden werden.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Lenksystem
- 2: obere Lenkwelle
- 3: Lenkrad
- 4: lenkbares Rad
- 5: Lenkstellereinheit
- 51: Doppelwicklungs-Drehstrommotor
- 6: Zahnstange
- 7: untere Lenkwelle
- 8: Lenkritzel
- 9: Spurstange
- 10: erster Wechselrichter
- 11, 12, 13: Halbbrücke des ersten Wechselrichters (10)
- 14: Transistor des ersten Wechselrichters (10)
- 15: Schutzschalter
- 17, 18, 19: Anschluss des ersten Wechselrichters (10)
- 20: zweiter Wechselrichter
- 21, 22, 23: Halbbrücke des zweiten Wechselrichters (20)
- 24: Transistor des zweiten Wechselrichters (20)
- 25: Schutzschalter
- 30: Sternschaltung
- 100: Schaltungsanordnung
- u1, v1, w1: Phase des ersten Phasensatzes
- u2, v2, w2: Phase des zweiten Phasensatzes

## Patentansprüche

1. Elektromechanisches Lenksystem (1) für ein Kraftfahrzeug umfassend einen Doppelwicklungs-Drehstrommotor (51) mit einem ersten Phasensatz und einem zweiten Phasensatz, die jeweils eine erste Phase (u1, u2), eine zweite Phase (v1, v2) und eine dritte Phase (w1, w2) aufweisen, und eine Schaltungsanordnung (100) zum Betreiben des Doppelwicklungs-Drehstrommotors (51), wobei die Schaltungsanordnung (100) einen ersten Wechselrichter (10) mit zu drei ersten Halbbrücken (11, 12, 13) verschalteten ersten Transistoren (14) und ersten Anschlüssen (17, 18 ,19), die elektrisch leitfähig mit den Phasen (u1, v1, w1) des ersten Phasensatzes des Doppelwicklungs-Drehstrommotors (51) verbunden sind, sowie einen zweiter Wechselrichter (20) mit zu drei zweiten Halbbrücken (21, 22, 23) verschalteten zweiten Transistoren (24) und zweiten Anschlüssen (27, 28, 29), die elektrisch leitfähig mit den Phasen (u2, v2, w2) des zweiten Phasensatzes des Doppelwicklungs-Drehstrommotors (51) verbunden sind, umfasst, **dadurch gekennzeichnet, dass** der erste Phasensatz mit dem zweiten Phasensatz als Sternschaltung (30) elektrisch leitfähig verbunden ist.

2. Lenksystem (1) nach Anspruch 1, **dadurch gekennzeichnet, dass** die Schaltungsanordnung (100) eingerichtet ist, mittels einer Pulsweitenmodulation betrieben zu werden, die bezüglich des ersten Wechselrichters (10) und des zweiten Wechselrichters (20) synchronisiert ist.

3. Lenksystem (1) nach Anspruch 1 oder Anspruch 2, **dadurch gekennzeichnet, dass** die ersten Anschlüsse (17, 18 ,19) jeweils über einen ersten Schutzschalter (15) mit den Phasen (u1, v1, w1) des ersten Phasensatzes elektrisch leitfähig verbunden sind und die zweiten Anschlüsse (27, 28 ,29) jeweils über einen zweiten Schutzschalter (25) mit den Phasen (u2, v2, w2) des zweiten Phasensatzes elektrisch leitfähig verbunden sind.

4. Lenksystem (1) nach einem der vorstehenden Ansprüche, **dadurch gekennzeichnet, dass** die Schaltungsanordnung (100) ein steuerbares Schaltelement umfasst, über das die Sternschaltung (30) zwischen dem ersten Phasensatz und dem zweiten Phasensatz geöffnet oder geschlossen werden kann.

5. Lenksystem (1) nach Anspruch 4, **gekennzeichnet durch** eine Fehlerdetektionseinheit, die ausgebildet ist, ein Auftreten eines Fehlers in den ersten Halbbrücken (11, 12, 13) und den zweiten Halbbrücken (21, 22, 23) zu erkennen, und bei einem erkannten Auftreten eines Fehlers in den ersten Halbbrücken (11, 12, 13) und einem erkannten Auftreten eines Fehlers in den zweiten Halbbrücken (21, 22, 23) das steuerbare Schaltelement derart anzusteuern, dass die Sternschaltung (30) geschlossen ist.

6. Lenksystem (1) nach einem der vorstehenden Ansprüche, **gekennzeichnet durch** eine Lenkstellereinheit (5), wobei die Lenkstellereinheit (5) den Doppelwicklungs-Drehstrommotor (51) umfasst.

7. Lenksystem (1) nach einem der vorstehenden Ansprüche, **dadurch gekennzeichnet, dass** das Lenksystem (1) zur Ausführung eines Verfahrens nach einem der nachfolgenden Ansprüche ausgebildet ist.

8. Verfahren zum Betreiben eines Doppelwicklungs-Drehstrommotors (51) in einem elektromechanischen Lenksystem, mit einem ersten Phasensatz und einem zweiten Phasensatz, die jeweils eine erste Phase (u1, u2), eine zweite Phase (v1, v2) und eine dritte Phase (w1 ,w2) aufweisen, wobei an den ersten Phasensatz ein erster Wechselrichter (10) und an den zweiten Phasensatz ein zweiter Wechselrichter (20) angeschlossen ist, wobei der erste Wechselrichter (10) aus zu drei ersten Halbbrücken (11, 12, 13) verschalteten ersten Transistoren (14) gebildet ist und der zweite Wechselrichter (20) aus zu drei zweiten Halbbrücken (21, 22, 23) verschalteten zweiten Transistoren (24) gebildet ist, **dadurch gekennzeichnet, dass** bei einem ersten Fehler in Bezug auf den ersten Wechselrichter (10) und einem zusätzlichen zweiten Fehler in Bezug auf den zweiten Wechselrichter (20) der Doppelwicklungs-Drehstrommotor (51) mit in Sternschaltung (30) verbundenem ersten Phasensatz und zweitem Phasensatz weiter betrieben wird.

9. Verfahren nach Anspruch 8, **dadurch gekennzeichnet, dass** der Doppelwicklungs-Drehstrommotor (51) mittels einer Pulsweitenmodulation betrieben wird, die bezüglich des ersten Wechselrichters (10) und des zweiten Wechselrichters (20) synchronisiert ist.

10. Verfahren nach Anspruch 8 oder Anspruch 9, **dadurch gekennzeichnet, dass** bei einem Erkennen des ersten Fehlers in Bezug auf den ersten Wechselrichter (10) und einem Erkennen des zusätzlichen zweiten Fehlers in Bezug auf den zweiten Wechselrichter (20) der erste Phasensatz und der zweite Phasensatz in Sternschaltung (30) verbunden werden.

11. Verfahren nach Anspruch 10, **dadurch gekennzeichnet, dass** ein bis zum Erkennen des zusätzlichen zweiten Fehlers geöffnetes Schaltelement geschlossen wird, wobei durch das Schließen des Schaltelements der erste Phasensatz und der zweite Phasensatz in Sternschaltung (30) verbunden werden.

12. Verfahren nach einem der Ansprüche 8 bis 11, **dadurch gekennzeichnet, dass** ein Fehler in Bezug auf einen der ersten Transistoren (14) der erste Fehler in Bezug auf den ersten Wechselrichter (10) ist, und dass ein Fehler in Bezug auf einen der zweiten Transistoren (24) der zweite Fehler in Bezug auf den zweiten Wechselrichter (20) ist.

13. Verfahren nach einem der Ansprüche 8 bis 12, **dadurch gekennzeichnet, dass** eine die Wechselrichter (10, 20) umfassende Schaltungsanordnung (100) auf ein Auftreten des ersten Fehlers und ein Auftreten des zweiten Fehlers überwacht wird.

14. Verfahren zum Betreiben eines elektromechanischen Lenksystems (1) mit einer einen Doppelwicklungs-Drehstrommotor (51) umfassenden Aktuatoreinheit (5), **dadurch gekennzeichnet, dass** der Doppelwicklungs-Drehstrommotor (51) gemäß einem Verfahren nach einem der Ansprüche 8 bis 13 betrieben wird.

## Claims

1. Electromechanical steering system (1) for a motor vehicle, comprising a double-winding three-phase motor (51) with a first phase set and a second phase set, which each have a first phase (u1, u2), a second phase (v1, v2) and a third phase (w1, w2), and a circuit arrangement (100) for operating the double-winding three-phase motor (51), the circuit arrangement (100) comprising a first inverter (10) with first transistors (14) connected to form three first half-bridges (11, 12, 13) and first terminals (17, 18, 19), which are electrically conductively connected to the phases (u1, v1, w1) of the first phase set of the double-winding three-phase motor (51), and a second inverter (20) with second transistors (24) connected to three second half-bridges (21, 22, 23) and second terminals (27, 28, 29), which are electrically conductively connected to the phases (u2, v2, w2) of the second phase set of the double-winding three-phase motor (51), **characterized in that** the first phase set is electrically conductively connected to the second phase set as a star connection (30).

2. Steering system (1) according to claim 1, **characterized in that** the circuit arrangement (100) is set up to be operated by means of pulse width modulation which is synchronized with respect to the first inverter (10) and the second inverter (20).

3. Steering system (1) according to claim 1 or claim 2, **characterized in that** the first terminals (17, 18, 19) are each electrically conductively connected to the phases (u1, v1, w1) of the first phase set via a first protective switch (15) and the second terminals (27, 28, 29) are each electrically conductively connected to the phases (u2, v2, w2) of the second phase set via a second protective switch (25).

4. Steering system (1) according to one of the preceding claims, **characterized in that** the circuit arrangement (100) comprises a controllable switching element via which the star connection (30) can be opened or closed between the first phase set and the second phase set.

5. Steering system (1) according to claim 4, **characterized by** a fault detection unit which is designed to detect an occurrence of a fault in the first half-bridges (11, 12, 13) and the second half-bridges (21, 22, 23) and, in the event of a detected occurrence of a fault in the first half-bridges (11, 12, 13) and a detected occurrence of a fault in the second half-bridges (21, 22, 23), to actuate the controllable switching element in such a way that the star connection (30) is closed.

6. Steering system (1) according to one of the preceding claims, **characterized by** a steering actuator unit (5), wherein the steering actuator unit (5) comprises the double-winding three-phase motor (51).

7. Steering system (1) according to one of the preceding claims, **characterized in that** the steering system (1) is designed to carry out a method according to one of the following claims.

8. Method for operating a double-winding three-phase motor (51) in an electromechanical steering system, having a first phase set and a second phase set, which each have a first phase (u1, u2), a second phase (v1, v2) and a third phase (w1, w2), a first inverter (10) being connected to the first phase set and a second inverter (20) being connected to the second phase set, the first inverter (10) being formed from first transistors (14) connected to form three first half-bridges (11, 12, 13) and the second inverter (20) is formed from second transistors (24) connected to three second half-bridges (21, 22, 23), **characterized in that** in the event of a first fault in relation to the first inverter (10) and an additional second fault in relation to the second inverter (20), the double-winding three-phase motor (51) continues to be operated with the first phase set and second phase set connected in a star connection (30).

9. Method according to claim 8, **characterized in that** the double-winding three-phase motor (51) is operated by means of pulse-width modulation which is synchronized with respect to the first inverter (10) and the second inverter (20).

10. Method according to claim 8 or claim 9, **characterized in that** when the first fault is detected with respect to the first inverter (10) and the additional second fault is detected with respect to the second inverter (20), the first phase set and the second phase set are connected in a star connection (30).

11. Method according to claim 10, **characterized in that** a switching element which is open until the additional second fault is detected is closed, the first phase set and the second phase set being connected in a star connection (30) by closing the switching element.

12. The method according to any one of claims 8 to 11, **characterized in that** a fault with respect to one of the first transistors (14) is the first fault with respect to the first inverter (10), and that a fault with respect to one of the second transistors (24) is the second fault with respect to the second inverter (20).

13. Method according to one of claims 8 to 12, **characterized in that** a circuit arrangement (100) comprising the inverters (10, 20) is monitored for an occurrence of the first fault and an occurrence of the second fault.

14. Method for operating an electromechanical steering system (1) with an actuator unit (5) comprising a double-winding three-phase motor (51), **characterized in that** the double-winding three-phase motor (51) is operated according to a method according to one of claims 8 to 13.

## Revendications

1. Système de direction électromécanique (1) pour un véhicule automobile comprenant un moteur triphasé à double enroulement (51) avec un premier jeu de phases et un deuxième jeu de phases, qui présentent respectivement une première phase (u1, u2), une deuxième phase (v1, v2) et une troisième phase (w1, w2), et un circuit (100) pour faire fonctionner le moteur triphasé à double enroulement (51), le circuit (100) comprenant un premier onduleur (10) avec des premiers transistors (14) connectés en trois premiers demi-ponts (11, 12, 13) et des premières bornes (17, 18, 19), qui sont reliés de manière électriquement conductrice aux phases (u1, v1, w1) du premier jeu de phases du moteur triphasé à double enroulement (51), ainsi qu'un deuxième onduleur (20) avec des deuxièmes transistors (24) connectés en trois deuxièmes demi-ponts (21, 22, 23) et des deuxièmes connexions (27, 28, 29) qui sont reliées de manière électriquement conductrice aux phases (u2, v2, w2) du deuxième jeu de phases du moteur triphasé à double enroulement (51), **caractérisé en ce que** le premier jeu de phases est relié de manière électriquement conductrice au deuxième jeu de phases sous forme de circuit en étoile (30).

2. Système de direction (1) selon la revendication 1, **caractérisé en ce que** le circuit (100) est agencé pour être exploité au moyen d'une modulation de largeur d'impulsion qui est synchronisée par rapport au premier onduleur (10) et au deuxième onduleur (20).

3. Système de direction (1) selon la revendication 1 ou la revendication 2, **caractérisé en ce que** les premiers raccords (17, 18, 19) sont respectivement reliés de manière électriquement conductrice aux phases (u1, v1, w1) du premier jeu de phases par l'intermédiaire d'un premier disjoncteur (15) et les deuxièmes raccords (27, 28, 29) sont respectivement reliés de manière électriquement conductrice aux phases (u2, v2, w2) du deuxième jeu de phases par l'intermédiaire d'un deuxième disjoncteur (25).

4. Système de direction (1) selon l'une des revendications précédentes, **caractérisé en ce que** l'agencement de circuit (100) comprend un élément de commutation commandable permettant d'ouvrir ou de fermer le circuit en étoile (30) entre le premier jeu de phases et le deuxième jeu de phases.

5. Système de direction (1) selon la revendication 4, **caractérisé par** une unité de détection de défaut qui est conçue pour détecter une apparition d'un défaut dans les premiers demi-ponts (11, 12, 13) et les seconds demi-ponts (21, 22, 23) et, en cas d'apparition détectée d'un défaut dans les premiers demi-ponts (11, 12, 13) et d'apparition détectée d'un défaut dans les seconds demi-ponts (21, 22, 23), pour commander l'élément de commutation commandable de telle sorte que le circuit en étoile (30) est fermé.

6. Système de direction (1) selon l'une des revendications précédentes, **caractérisé par** une unité d'actionnement de direction (5), l'unité d'actionnement de direction (5) comprenant le moteur triphasé à double enroulement (51).

7. Système de direction (1) selon l'une des revendications précédentes, **caractérisé en ce que** le système de direction (1) est configuré pour mettre en œuvre un procédé selon l'une des revendications suivantes.

8. Procédé pour faire fonctionner un moteur triphasé à double enroulement (51) dans un système de direction électromécanique, avec un premier jeu de phases et un deuxième jeu de phases, qui présentent chacun une première phase (u1, u2), une deuxième phase (v1, v2) et une troisième phase (w1, w2), un premier onduleur (10) étant raccordé au premier jeu de phases et un deuxième onduleur (20) étant raccordé au deuxième jeu de phases, le premier onduleur (10) étant constitué de trois premiers demi-ponts (11, 12, 13) et le deuxième onduleur (20) est formé de deuxièmes transistors (24) connectés en trois deuxièmes demi-ponts (21, 22, 23), **caractérisé en ce que,** en cas d'un premier défaut par rapport au premier onduleur (10) et d'un deuxième défaut supplémentaire par rapport au deuxième onduleur (20), le moteur triphasé à double enroulement (51) continue à fonctionner avec le premier jeu de phases et le deuxième jeu de phases connectés en circuit en étoile (30).

9. Procédé selon la revendication 8, **caractérisé en ce que** le moteur triphasé à double enroulement (51) est actionné au moyen d'une modulation de largeur d'impulsion qui est synchronisée par rapport au premier onduleur (10) et au deuxième onduleur (20).

10. Procédé selon la revendication 8 ou la revendication 9, **caractérisé en ce que,** lors d'une détection du premier défaut par rapport au premier onduleur (10) et d'une détection du deuxième défaut supplémentaire par rapport au deuxième onduleur (20), le premier jeu de phases et le deuxième jeu de phases sont connectés en circuit en étoile (30).

11. Procédé selon la revendication 10, **caractérisé en ce qu'**un élément de commutation ouvert jusqu'à la détection de la deuxième erreur supplémentaire est fermé, la fermeture de l'élément de commutation permettant de relier le premier jeu de phases et le deuxième jeu de phases en circuit en étoile (30).

12. Procédé selon l'une des revendications 8 à 11, **caractérisé en ce qu'**un défaut relatif à l'un des premiers transistors (14) est le premier défaut relatif au premier onduleur (10), et **en ce qu'**un défaut relatif à l'un des deuxièmes transistors (24) est le deuxième défaut relatif au deuxième onduleur (20).

13. Procédé selon l'une des revendications 8 à 12, **caractérisé en ce qu'**un circuit (100) comprenant les onduleurs (10, 20) est surveillé pour une apparition de la première erreur et une apparition de la deuxième erreur.

14. Procédé de fonctionnement d'un système de direction électromécanique (1) avec une unité d'actionnement (5) comprenant un moteur triphasé à double enroulement (51), **caractérisé en ce que** le moteur triphasé à double enroulement (51) est actionné selon un procédé selon l'une quelconque des revendications 8 à 13.
